# EUROPÄISCHE PATENTANMELDUNG

(11) **EP 4 610 303 A2**
(43) Veröffentlichungstag der Anmeldung: **03.09.2025**
(21) Anmeldenummer: 24222946.6
(22) Anmeldetag: 23.12.2024
(51) Int. Cl.: C08J 11/06

(54) **VERFAHREN ZUM REZYKLIEREN VON POLYSTYROL ENTHALTEND ORGANISCHE BROM-VERBINDUNGEN, REZYKLIERTES POLYSTYROL-GRANULAT, SOWIE DESSEN VERWENDUNG**

(30) Priorität: 08.01.2024 EP 24150641
(71) Anmelder: swisspor Management AG, 6312 Steinhausen (CH)
(72) Erfinder: KNEBEL, Oliver, 6003 Luzern (CH); WILLETAL, Jürgen, 5623 Boswil (CH); BROMBACHER, Volker, 5644 Auw (CH)
(74) Vertreter: Stolmár & Partner Intellectual Property GmbH

(57) **Zusammenfassung**

Die vorliegende Erfindung bezieht sich auf ein Verfahren zum Rezyklieren von Polystyrol (1) enthaltend organische Brom-Verbindungen (2), umfassend
- Zerkleinern und Erhitzen des zu rezyklierenden Polystyrols (1) enthaltend organische Brom-Verbindungen (2), wodurch eine Polystyrol-Schmelze (1a) erhalten wird,
- Zugabe mindestens einer Base (3) zum zerkleinerten Polystyrol (1) und/oder zur Polystyrol-Schmelze (1a) und Vermischen derselben, wodurch eine Polystyrol-Mischschmelze (4) erhalten wird, sowie
- Abkühlen und Zerkleinern der Polystyrol-Mischschmelze (4), wodurch ein rezykliertes Polystyrol-Granulat (5a) erhalten wird,
wobei die Polystyrol-Mischschmelze (4) vor dem Abkühlen und Zerkleinern in mindestens einem ersten (6a) und in einem nachfolgenden (6b) Reaktionsgefäss (6) bei einer Temperatur zwischen 180°C und 285°C und einer Verweil¬zeit von insgesamt mindestens 4 Minuten vermischt wird, wobei das erste Reaktionsgefäss (6a) einen Extruder, und das zweite Reaktionsgefäss (6b) einen Reaktor oder Mischer, oder einen Extruder darstellt.

Beansprucht wird auch rezykliertes Polystyrol-Granulat (5a) erhalten nach dem erfindungsgemässen Verfahren sowie die Verwendung des Polystyrol-Granulat (5a) sowie des nach dem Verfahren erhaltenen Polystyrol-Granulats (5a).

## Beschreibung

Die vorliegende Erfindung bezieht sich auf ein Verfahren zum Rezyklieren von Polystyrol enthaltend organische Brom-Verbindungen, rezykliertes Polystyrol-Granulat erhalten nach dem Verfahren, sowie die Verwendung des rezyklierten Polystyrol-Granulat.

Zur Wärmedämmung von Gebäuden werden schon länger Wärmedämmstoffe, insbesondere Wärmedämmplatten, aus expandiertem (EPS) und extrudiertem (XPS) Polystyrol eingesetzt. Um deren Brandverhalten zu verbessern, d.h. die Platten so zu verändern, dass sie über längere Zeit einem Feuer standhalten können, werden bei der Herstellung der Platten schon seit längerem Flammschutzmittel zugesetzt. Dabei hat sich gezeigt, dass organische Brom-Verbindungen, wie beispielsweise 1,2,5,6,9,10-Hexabromcyclododecan (HBCD), sich besonders gut als Flammschutzmittel eignen.

Wird eine Gebäudehülle mit Wärmedämmstoffen renoviert oder abgerissen, wird vermehrt auch darauf geachtet, möglichst viele Materialien zu rezyklieren, da diese oft wertvolle Rohstoffe enthalten. Dies gilt insbesondere auch für die verbauten Wärmedämmplatten. Hierzu werden diese nach dem Entfernen vom Untergrund zerkleinert und - typischerweise mittels Extruder bei Temperaturen von beispielsweise 180°C - aufgeschmolzen und wieder zu den Ausgangsmaterialien für neue EPS- oder XPS-Platten verarbeitet.

Seit einiger Zeit wird HBCD jedoch als schwer abbaubar, bioakkumulativ und toxisch eingestuft. Deshalb wurde HBCD im Mai 2013 in das Stockholmer Übereinkommen über persistente organische Schadstoffe aufgenommen.

Somit gilt für den HBCD-Einsatz als Flammschutzmittel ein weltweites Herstellungs- und Anwendungsverbot. Deshalb ist es nicht mehr erlaubt, alte HBCD-haltige Wärmedämmstoffe wieder zu verwenden. Letztere müssen entweder mit organischen Lösungsmitteln in einem äusserst aufwändigen Verfahren vom HBCD getrennt werden, oder thermisch verwertet werden.

Mit dem Ziel, HBCD-haltige Wärmedämmplatten trotzdem rezyklieren zu können, wird in der EP-A-3 858 907 ein Verfahren zum Rezyklieren von EPS- und/oder XPS-Abfall offenbart, umfassend das Komprimieren und Zerkleinern der EPS- resp. XPS-Abfälle, Zugabe eines Antioxidans, Zugabe einer oder mehrerer starker Basen; sowie das Extrudieren des Polystyrols zur Bildung von rezykliertem Polystyrol in granulierter Form. Allerdings werden keine Angaben gemacht, wie beispielsweise Beispiele, aus denen u.a. hervorgeht, wie die spezifischen Verfahrensparameter, wie die Reaktionszeit resp. die Verweilzeit des HBCD-haltigen Polystyrols, der Base und des Antioxidans in einem Reaktor, eingestellt werden müssen, um das HBCD soweit abzubauen, dass das Rezyklat problemlos wieder als Rohstoff zur Herstellung von EPS- resp. XPS-Wärmedämmplatten zu verwenden. Auch haben eigene Versuche gezeigt, dass bei einer für Extrusionsprozesse üblichen Verweilzeit von typischerweise deutlich unter einer Minute die HBCD-Gehalte bei den empfohlenen Temperaturen nicht oder nur ungenügend reduziert werden können.

Die DE-A-10 2022 001 442 beschreibt ein Verfahren zum Rezyklieren von geschäumten Polystyrol-Dämmplatten bei welchem unerwünschte Flammschutzmittel wie HBCD zerstört werden. Dadurch kann das Polystyrol erneut in den Wirtschaftskreislauf eingebracht werden und muss nicht verbrannt werden. Durch Zugabe zum Polystyrol eines sehr grossen Überschusses an Natriumhydroxid als Base und anschliessender inniger Vermischung während beispielsweise 180 Sekunden bei einer Temperatur von 165°C sollen die bromierten Verbindungen vollständig zerstört werden. Beim resultierenden rezyklierten Polystyrol sind keine bromierten organischen Verbindungen mehr nachweisbar, jedoch der grosse Anteil überschüssiger Base führt zu einem deutlich erhöhten Aschegehalt. Dies erweist sich in der späteren Anwendung oft als stark nachteilig, da die überschüssige Base nicht nur zu Problemen in Bezug auf die Arbeitssicherheit führt, sondern auch die bei der Weiterverarbeitung eingesetzten Geräte einer erhöhten Korrosion aussetzt. Auch kann durch den erhöhten Aschegehalt die Dämmwirkung negativ beeinflusst werden. Die überschüssige Base bildet zudem mit Wasser eine stark ätzende, schmierige Flüssigkeit, wodurch Massnahmen in Bezug auf die Arbeitssicherheit getroffen werden müssen. Dementsprechend sollte das mit diesem Verfahren rezyklierte Polystyrol und daraus hergestellte Produkte nur mit Handschuhen berührt werden. Zudem kann sich die stark alkalische Oberfläche von daraus hergestellten Dämmplatten auch auf die Adhäsion zu einer nachfolgenden Schicht als negativ erweisen.

Somit ist es die Aufgabe der vorliegenden Erfindung, geeignete Verfahrensparameter zu finden, anhand welcher der Gehalt von organischen Brom-Verbindungen wie HBCD in zu rezyklierendem Polystyrol-Granulat soweit gesenkt werden kann, dass das Polystyrol-Granulat ohne weiteres, und ohne wesentliche Beeinträchtigung der physikalischen Eigenschaften, zu neuen EPS- und/oder XPS-Wärmedämmplatten verarbeitet werden kann. Dabei soll der Gehalt der organischen Brom-Verbindungen im Rezyklat höchstens 500 ppm betragen. Das Verfahren soll so ausgestaltet sein, dass das resultierende Rezyklat keine oder nur einen sehr niedrigen Anteil an Restbase aufweist, sodass das Rezyklat und die daraus hergestellten Produkte keinerlei Einschränkungen in Bezug auf die Arbeitssicherheit unterliegen, damit aufgrund der Restbase keine Kennzeichnungspflicht der Produkte besteht und Arbeiten ohne Handschuhe oder anderen Sicherheitsausrüstungen möglich ist. Zudem soll das Rezyklat einen nur leicht erhöhten Aschegehalt aufweisen, da dieser die weitere Verarbeitung und die spätere Dämmwirkung von Dämmplatten aus Rezyklat negativ beeinflussen kann.

Die Aufgabe konnte überraschenderweise gelöst werden mit einem Verfahren zum Rezyklieren von Polystyrol (1) enthaltend organische Brom-Verbindungen (2), umfassend
- Zerkleinern und Erhitzen des zu rezyklierenden Polystyrols (1) enthaltend organische Brom-Verbindungen (2), wodurch eine Polystyrol-Schmelze (1a) erhalten wird,
- Zugabe mindestens einer Base (3) zum zerkleinerten Polystyrol (1) und/oder zur Polystyrol-Schmelze (1a) und Vermischen derselben, wodurch eine Polystyrol-Mischschmelze (4) erhalten wird, sowie
- Abkühlen und Zerkleinern der Polystyrol-Mischschmelze (4), wodurch ein rezykliertes Polystyrol-Granulat (5a) erhalten wird,
dadurch gekennzeichnet, dass die Polystyrol-Mischschmelze (4) vor dem Abkühlen und Zerkleinern in mindestens einem ersten (6a) und einem nachfolgenden (6b) Reaktionsgefäss (6) bei einer Temperatur zwischen 180°C bis 285°C und einer Verweilzeit von insgesamt mindestens 4 Minuten vermischt wird, wobei das
i) erste Reaktionsgefäss (6a) einen Extruder, und
ii) zweite Reaktionsgefäss (6b) einen Reaktor oder Mischer, oder einen Extruder darstellt.

Beansprucht wird auch rezykliertes Polystyrol-Granulat (5a) erhalten nach dem erfindungsgemässen Verfahren, wobei der Anteil von organischen Brom-Verbindungen (2) höchstens 500 ppm, bevorzugt höchstens 100 ppm, bestimmt nach Toluol-Extraktion mit nachfolgender GC-MS- bzw. MS/MS-Bestimmung, beträgt, wobei das Polystyrol-Granulat (5a)
- einen pH-Wert von höchstens 9.0, bevorzugt höchstens 8.5, und insbesondere höchstens 8.0, aufweist, wenn 10 g Polystyrol-Granulat (5a) mit einem Durchmesser von höchstens 2 mm, gemessen nach ISO 3310-1:2016, mit 10 g Wasser während 15 Minuten miteinander vermischt werden, und/oder
- einen Aschegehalt, bestimmt bei 800°C nach DIN EN ISO 3451-1 :2019-05, von höchstens 2 Gew.-%, bevorzugt höchstens 1 Gew.-%, aufweist.

Zudem wird auch die Verwendung des rezyklierten Polystyrol-Granulats (5a) erhalten nach dem erfindungsgemässen Verfahren und des erfindungsgemässen rezyklierten Polystyrol-Granulats (5a) zur Herstellung von Extrudierten (XPS) Polystyrol-Dämmplatten oder zur Herstellung von expandierbaren Polystyrol-Beads beansprucht, welche zu Expandierten (EPS) Polystyrol-Artikel, insbesondere zu Expandierten (EPS) Polystyrol-Dämmplatten oder Expandierten (EPS) Verpackungsmaterialien weiterverarbeitet werden können.

Überraschenderweise wurde gefunden, dass mit dem erfindungsgemässen Verfahren zum Rezyklieren von Polystyrol (1) das darin enthaltene Flammschutzmittel auf Basis von organischen Brom-Verbindungen (2), wie beispielsweise HBCD, durch deutliche Verlängerung der üblichen Verweilzeit, d.h. Reaktionszeit, der Polystyrol-Schmelze (1a) in den Reaktionsgefässen (6a, 6b) durch Zugabe einer starken Base so stark abgebaut wird, sodass beispielsweise bei einem HBCD-Ausgangswert von 6500 ppm und einer Temperatur von 280°C der HBCD-Restgehalt im rezyklierten Polystyrol-Granulat (5a) die Nachweisgrenze von 50 ppm unterschritten werden kann, ohne einen grösseren Anteil von Rest-Base. Somit kann mit dem erfindungsgemässen Verfahren Polystyrol (1) enthaltend organische Bromverbindungen (2) auf einfache Art und Weise und ohne Einsatz von organischen Lösungsmitteln so rezykliert werden, dass es auch als 100%-iges Rezyklat, d.h. ohne Beimischung von neuem, HBCD-freiem Polystyrol, wiederverwertet werden kann. Aufgrund des niedrigen Anteils an Rest-Base - und somit des damit verbundenen niedrigen Aschegehaltes - kann das Rezyklat problemlos weiterverarbeitet werden, ohne Einschränkungen in Bezug auf eine mögliche Korrosion der verwendeten Apparaturen und Maschinen. Auch wird kein spezieller Arbeitsschutz sowohl während der Weiterverarbeitung wie auch beim Gebrauch von erhaltenen Dämmplatten benötigt. Eine thermische Verwertung des Polystyrols (1) enthaltend solche Bromverbindungen (2) ist nicht mehr notwendig. Dadurch wird die Umweltbilanz des vielfach eingesetzten HBCD-haltigen Polystyrols (1) wesentlich erhöht.

Es hat sich gezeigt, dass für die erfolgreiche Zersetzung der organischen Brom-Verbindungen (2) die Zugabe eines Antioxidans nicht zwingend notwendig ist, d.h. die Polymereigenschaften des nach dem Verfahren erhaltenen rezyklierten Polystyrol-Granulat (5a) und des erfindungsgemäss rezyklierten Polystyrol-Granulats (5a) eignen sich bei geeigneten Verfahrensparametern auch ohne die Zugabe von Antioxidans für die Wiederverwertung, beispielsweise bei der Herstellung von Wärmedämmplatten.

Im Gegensatz zum bekannten Verfahren der DE-A-10 2022 001 442, welches zwar kürzere Reaktionszeiten erlaubt, dafür jedoch im erhaltenen Produkt einen sehr hohen Anteil an Restbase und an Asche zurücklässt, führt das erfindungsgemässe Verfahren zu rezykliertem Polystyrol-Granulat (5a) mit deutlich niedrigerem Ascheanteil und/oder einem neutralen oder nur leicht alkalischen pH-Wert. Dies führt zu keiner Beeinträchtigung des Arbeitssicherheitsschutzes, der weiteren Verarbeitung des Recyklats bzw. der Dämmwirkung von nachfolgend hergestellten EPS- oder XPS-Dämmplatten, sowie zu vergleichbarer Adhäsion zu Schichten, welche mit den Dämmplatten nachfolgend verbunden werden.

Zudem kann das erfindungsgemässe Verfahren auch ohne den Verfahrensschritt des Komprimierens des zu rezyklierenden Polystyrols erfolgreich durchgeführt werden.

Erste Versuche zeigen überraschenderweise, dass die Reaktionstemperatur bei entsprechender Verweilzeit und erhöhter Mischgeschwindigkeit deutlich reduziert werden kann, um unerwünschte Zersetzungsreaktionen beim Polystyrol zu reduzieren oder sogar ganz zu verhindern. So wird zudem erwartet, dass sogar bei einer Reaktionstemperatur von 200°C oder darunter die organischen Brom-Verbindungen (2) soweit reduziert werden können, um die Nachweisgrenze von 50 ppm zu unterschreiten.

Solch niedrige Rest-HBCD-Werte von beispielsweise 50 ppm oder weniger und mit im Wesentlichen vergleichbaren Polystyrol Eigenschaften des erfindungsgemässen rezyklierten Polystyrol-Granulat (5a) erlauben die problemlose Herstellung von EPS- und XPS-Wärmedämmplatten aus 100% rezykliertem Polystyrol-Granulat (5a), welche die gleichen physikalischchemischen Eigenschaften aufweisen wie die herkömmlichen Wärmedämmplatten.

Das erfindungsgemässe Verfahren zum Rezyklieren von Polystyrol (1) enthaltend organische Brom-Verbindungen (2), umfasst
- Das Zerkleinern und Erhitzen des zu rezyklierenden Polystyrols (1) enthaltend organische Brom-Verbindungen (2), wodurch eine Polystyrol-Schmelze (1a) erhalten wird,
- Die Zugabe mindestens einer Base (3) zum zerkleinerten Polystyrol (1) und/oder zur Polystyrol-Schmelze (1a) und Vermischen derselben, wodurch eine Polystyrol-Mischschmelze (4), enthaltend die Polystyrol-Schmelze (1a) und die Base (3), erhalten wird, sowie
- Das Abkühlen und Zerkleinern der Polystyrol-Mischschmelze (4), wodurch ein rezykliertes Polystyrol-Granulat (5a) erhalten wird.

Das erhaltene Granulat (5a) kann dann weiterverarbeitet werden, beispielsweise zu Expandierten (EPS) oder Extrudierten (XPS) Polystyrol-Dämmplatten.

Für das Verfahren ist dabei erfindungswesentlich, dass die Polystyrol-Mischschmelze (4) vor dem Abkühlen und Zerkleinern in mindestens einem ersten (6a) und einem nachfolgenden (6b) Reaktionsgefäss (6) bei einer Temperatur zwischen 180°C bis 285°C und einer Verweilzeit von insgesamt mindestens 4 Minuten vermischt wird. Dabei stellt das
i) erste Reaktionsgefäss (6a) einen Extruder, und
ii) zweite Reaktionsgefäss (6b) einen Reaktor oder Mischer, oder einen Extruder dar.

Das erste (6a) und zweite (6b) Reaktionsgefäss (6) sind hintereinander - und somit in Serie, d.h. unmittelbar oder durch lediglich ein kurzes Verbindungselement getrennt, angeordnet. Dabei ist das erste Reaktionsgefäss jeweils ein Extruder, das nachfolgende ein Reaktor oder Mischer, oder ein zweiter Extruder.

Die Verweilzeit - in aller Regel als Summe der Verweilzeiten im ersten (6a) und im nachfolgenden (6b) Reaktionsgefäss angegeben - kann bei höheren Temperaturen, z.B. im Bereich von 280°C, kürzer gehalten werden als bei niedrigeren Temperaturen von beispielsweise 200 - 250°C. Dass beispielsweise bei einer Temperatur von 280°C und einer Verweilzeit von weniger als 6 Minuten der HBCD-Gehalt von ursprünglich 6500 ppm auf einen Restgehalt im rezyklierten Polystyrol-Granulat (5a) unter die Nachweisgrenze von 50 ppm reduziert werden kann, ist äusserst überraschend, zumal ohne, resp. nur mit einem geringen Überschuss an Base gearbeitet wird. Dabei verändert sich das Molekulargewicht und das Fliessverhalten des Polystyrols nicht oder nur soweit, dass das Rezyklat (5a) problemlos - beispielsweise für EPS- und XPS-Dämmplatten - wieder verwendet werden kann.

Bei den erfindungsgemässen Verfahrensparametern reagiert die Base (3) mit der organischen Brom-Verbindung (2), wodurch sich letztere zersetzt, ohne dass sich die molekularen Eigenschaften des Polystyrols so stark verändern, dass eine Wiederverwendung unmöglich wird. Zudem bilden sich keine toxischen Reaktionsprodukte, was äusserst vorteilhaft ist. Somit können beispielsweise auch mit 100% Rezyklat wieder Dämmplatten in Form von XPS- resp. EPS-Platten hergestellt werden.

In einer bevorzugten Ausführungsform wird die Menge der eingesetzten Base so dosiert, dass das molare Verhältnis der Base (3) - unter Berücksichtigung deren Ionenzahl - zum Brom-Anteil der im zu rezyklierenden Polystyrol vorhandenen organischen Brom-Verbindungen höchstens 5:1, bevorzugt höchstens 4:1, und insbesondere höchstens 3:1, beträgt. Somit reagieren bei vollständiger Zersetzung der organischen Brom-Verbindungen (2) mindestens 20 %, bevorzugt mindestens 25 %, und insbesondere 33 % der eingesetzten Base (3). Ein geringer Überschuss an Base ist in aller Regel bevorzugt, um eine möglichst vollständige Zersetzung der organischen Brom-Verbindung (2) zu ermöglichen, auch wenn die Durchmischung nicht ganz optimal ist. Auch können dadurch allzu lange Verweilzeiten vermieden werden, wodurch die Zersetzung des Polystyrols verhindert oder zumindest reduziert wird.

Vorteilhafterweise werden die Verweilzeit der Polystyrol-Mischschmelze (4), die Mischgeschwindigkeit und die Temperatur im ersten (6a) und nachfolgenden (6b) Reaktionsgefäss (6) so optimiert, dass der Gehalt der organischen Brom-Verbindungen (2) im erhaltenen rezyklierten Polystyrol-Granulat (5a) höchstens 500 ppm, bevorzugt höchstens 100 ppm, bestimmt nach Toluol-Extraktion mit nachfolgender GC-MS- bzw. MS/MS-Bestimmung, beträgt. Diese niedrigen Gehalte an organischen Brom-Verbindungen erlauben die problemlose Weiterverwendung des Rezyklats. Dies gilt insbesondere für die niedrigeren HBCD-Gehalte von höchstens 500 ppm und insbesondere von höchstens 100 ppm, bei welchen auch keine Abmischung mit neuem, HBCD-freiem, Polystyrol notwendig wird. Dabei sind die Verfahrensparameter Verweilzeit, Mischgeschwindigkeit und Temperatur im Reaktionsgefäss nicht nur voneinander abhängig, sondern auch von der spezifischen Ausführung der Reaktionsgefässe (6a, 6b) und der jeweiligen Vermischung der Reaktionspartner, insbesondere innerhalb des ersten Reaktionsgefässes (6a). Der Fachmann kann diese Verfahrensparameter optimal und spezifisch auf die eingesetzte Apparatur einstellen.

In einer bevorzugten Ausführungsform wird ein Antioxidans (7) zum zerkleinerten Polystyrol (1) und/oder zur Polystyrol-Schmelze (1a) zugegeben und damit vermischt, wobei die Zugabe zusammen mit der Base (3) oder separat erfolgen kann. Dabei wurde gefunden, dass die Zugabe des Antioxidans (7) für die Zersetzung der organischen Brom-Verbindung nicht notwendig ist. Allerding kann dessen Anwesenheit Nebenreaktionen wie den Abbau des Molekulargewichts des Polystyrols (1) reduzieren.

Das zu rezyklierende Polystyrol (1) wird im erfindungsgemässen Verfahren bevorzugt auf eine Partikelgrösse von höchstens 5 cm, bevorzugt höchstens 3 cm, gemessen gemäss ISO 3310-1:2016, zerkleinert. Vorteilhafterweise wird darauf geachtet, dass die Polystyrol Partikel im Wesentlichen nicht kleiner als 0.5 cm, insbesondere nicht kleiner als 0.8 cm, sind, wodurch eine gute Prozessierbarkeit erhalten und eine elektrostatische Aufladung der Partikel reduziert oder sogar verhindert wird. Die Zerkleinerung des zu rezyklierenden Polystryrols (1) erfolgt bevorzugt mittels Schredder, Granulator, Schneidmühle, Messermühle, Hammermühle, Wellen-Zerkleinerer und/oder Häcksler.

In einer anderen bevorzugten Ausführungsform des erfindungsgemässen Verfahrens
- Beträgt die gemeinsame Verweilzeit der Polystyrol-Mischschmelze (4) im ersten (6a) und im nachfolgenden (6b) Reaktionsgefäss (6) 4 bis 20 Minuten, bevorzugt 4 bis 15 Minuten, insbesondere während 4 bis 10 Minuten. Ist das zweite Reaktionsgefäss (6b) ein Reaktor oder Mischer, ist die Verweilzeit der Polystyrol-Mischschmelze (4) im zweiten Reaktionsgefäss (6b) typischerweise länger als im ersten Reaktionsgefäss (6a), wobei die jeweiligen Verweilzeiten von den Dimensionen der Reaktionsgefässe (6a, 6b) und der jeweiligen Verfahrensparametern abhängig sind, und/oder
- Beträgt die Temperatur im ersten (6a) und im nachfolgenden (6b) Reaktionsgefäss (6) zwischen 180°C und 285°C, bevorzugt zwischen 190°C und 285°C, insbesondere zwischen 220°C und 280°C. Die Temperaturen können in beiden Reaktionsgefässen gleich oder unterschiedlich sein. Dabei ist es oft vorteilhaft, wenn die Temperatur im zweiten Reaktionsgefäss (6b) gleich oder höher ist als im ersten Reaktionsgefäss (6a). Diese Verfahrensparameter erlauben eine besonders optimale und effiziente Durchführung des Verfahrens.

Das erste (6a) und zweite (6b) Reaktionsgefäss (6) ermöglicht eine optimale Fahrweise des erfindungsgemässen Verfahrens. So können die jeweiligen Temperaturen, Verweilzeiten und Vermischung mit unterschiedlichen Scherkräften in den Reaktionsgefässen (6a, 6b) gezielt und voneinander unabhängig eingestellt werden. Dies ermöglicht auf einfache Art und Weise eine Verweilzeit der Polystyrol-Schmelze (1a) bei der gewünschten Reaktionstemperatur von bis zu 20 Minuten oder mehr.

Das erste Reaktionsgefäss (6a) im Form eines Extruders ermöglicht eine optimale Durchmischung der einzelnen Komponenten und der Wärmeübertragung innerhalb kurzer Zeit. Das nachgeschaltete Reaktionsgefäss (6b) - ob Extruder, Reaktor oder Mischer, ermöglicht eine erhöhte Verweilzeit bei Reaktionsbedingungen, beispielsweise der Reaktionstemperatur, wobei die Polystyrol-Schmelze (1a) typischerweise zumindest leicht durchmischt wird. Somit erlaubt diese Auswahl und Anordnung eine kontinuierliche Fahrweise, auch bei längeren Verweilzeiten. Das erste Reaktionsgefäss (6a) weist bevorzugt mindestens ein Heizelement auf, beispielsweise einen beheizbaren Reaktormantel, um die notwendige Temperatur des Reaktors optimal einzustellen. Das nachfolgende Reaktionsgefäss (6b) weist bevorzugt ebenfalls mindestens ein Heizelement, beispielsweise einen Heizmantel, auf. Alternativ kann auch eine Isolation verwendet werden, sofern die gewünschte Temperatur der Polystyrol-Mischschmelze (4) gehalten werden kann.

Der Extruder als erstes (6a) und gegebenenfalls zweites (6b) Reaktionsgefäss (6) ist bevorzugt ein Kolbenextruder, Kaskadenextruder, Planetwalzenextruder, Schneckenextruder, Einschneckenextruder, Doppelschneckenextruder, Vielwellenextruder, Co-Kneter, oder Ringextruder. Dabei eignen sich der Kaskadenextruder, Planetwalzenextruder, Schneckenextruder, Doppelschneckenextruder, Vielwellenextruder, Co-Kneter und Ringextruder sowohl als erstes (6a) und nachfolgendes (6b) Reaktionsgefäss. Der Kolbenextruder, Einschneckenextruder werden bevorzugt als nachfolgendes Reaktionsgefäss (6b) eingesetzt. Ist das nachgeschaltete Reaktionsgefäss (6b) in Form eines Reaktors oder Mischers, ist dieses bevorzugt in Form eines Schmelze-Mischers oder statischen Mischers. Dabei wird erfindungsgemäss zwischen Reaktor und Mischer nicht unterschieden. Diese Reaktionsgefässe sind kommerziell erhältlich und eignen sich besonders gut für das erfindungsgemässe Verfahren.

Die mindestens eine Base (3) stellt bevorzugt eine anorganische Base wie ein Alkali- oder Erdalkalihydroxid oder -oxid, wie beispielsweise Kalium- oder Natriumhydroxid, Magnesium- und/oder Calciumhydroxid, Magnesium- und/oder Calciumoxid; Aluminiumhydroxid, ein Alkaliphosphat oder - phosphit, und/oder eine organische Base wie 1,8-Bis(N,N-dimethylamino)-naphthalin oder 1,4-Diazabicyclo[2.2.2]octan, oder Mischungen davon, dar. Diese Basen (3) sind kommerziell erhältlich und eignen sich aufgrund deren Alkalinität besonders gut für die Zersetzung der organischen Brom-Verbindungen (2).

Das mindestens eine Antioxidans (7) stellt bevorzugt ein sterisch gehindertes Phenol, ein N-phenylanilin oder Derivate davon, ein sterisch gehindertes aromatisches Amin, ein Dialkyl Ester der Thiodipropionsäure, ein sterisch gehindertes aromatisches Amin, ein Phosphat Ester oder Phosphite Ester, beispielsweise Tris(2,4-di-tert-butylphenyl)phosphit, ein anorganisches Phosphit oder Phosphat, beispielsweise Kaliummonoorthophosphat (KH₂PO₄), oder Mischungen davon, dar. Diese Antioxidantien (7) sind kommerziell erhältlich und eignen sich aufgrund deren Wirksamkeit, sowie Lager- und Dosierbarkeit besonders gut im erfindungsgemässen Verfahren.

Weitere geeignete, nicht-limitierende Antioxidantien (7) sind Irganox^{®} 245, umfassend Ethylen bis (oxyethylene) bis-(3-(5-tert-butyl-4-hydroxy-m-tolyl)-propionat); Irganox^{®} 1010, umfassend Pentaerythritol tetrakis[3-[3,5-di-tert-butyl-4-hydroxyphenyl]propionate); Irganox^{®} 1076, umfassend Octadecyl-3-(3,5-di-tert-butyl-4-hydroxyphenyl)-propionate); Irganox^{®} PS 800, umfassend Didodecyl-3,3'-thiodipropionate); sowie Irganfos 168, umfassend Tris(2,4-di-tert.-butylphenyl) phosphite.

Die Base (3) und/oder das Antioxidans (7) liegen bevorzugt in Form eines Festkörpers oder einer Flüssigkeit vor, wobei die Flüssigkeit gegebenenfalls auf einem Trägermaterial adsorbiert sein kann. Dabei erfolgt die Zugabe der Base (3) und/oder des Antioxidans (7) zum zerkleinerten Polystyrol (1) und/oder zur Polystyrol-Schmelze (1a) bevorzugt pulverförmig, was eine einfache und gut kontrollierte Zugabe erlaubt.

In einer weiteren bevorzugten Ausführungsform des erfindungsgemässen Verfahrens
- Liegen die Base (3) und/oder das Antioxidans (7) in Form eines Festkörpers vor und weisen eine Partikelgrösse von höchstens 2 cm, bevorzugt höchstens 1 cm, gemessen gemäss ISO 3310-1:2016 auf. Dies erlaubt eine gute Dosierbarkeit der Base (3) und führt in der Polystyrol-Mischschmelze (4) aufgrund der grossen Oberfläche zu einer guten und effizienten Reaktion;
- Werden die Base (3) und gegebenenfalls das Antioxidans (7) in je einer Menge von 0.1 bis 4 Gew.-%, insbesondere von 0.2 bis 3 Gew.-%, bezogen auf 100 Gew.-% Polystyrol (1), d.h. zu rezyklierendes Polystyrol (1), dem Polystyrol (1) zugegeben. Dabei kann, sofern der Gehalt an organischen Brom-Verbindungen (2) im zu rezyklierenden Polystyrol (1) bekannt ist und nicht zu stark schwankt, optimal eingestellt werden, sodass die Mengen der Base (3) und des Antioxidans (7) im resultierenden rezyklierten Polystyrol-Granulat (5a) zum grössten Teil wegreagiert, d.h. nicht mehr vorhanden sind; und/oder
- Beträgt das Gewichtsverhältnis des Antioxidans (7) zur Base (3) von 0.2 bis 5, insbesondere von 0.3 bis 3.5. Dies führt zu einer optimalen Balance des Antioxidans (7) und der Base (3).

Beim erfindungsgemässen rezyklierten Polystyrol-Granulat (5a), welches nach dem erfindungsgemässen Verfahren erhalten wird, beträgt der Anteil von organischen Brom-Verbindungen (2) höchstens 500 ppm, bevorzugt höchstens 100 ppm, bestimmt nach Toluol-Extraktion mit nachfolgender GC-MS- bzw. MS/MS-Bestimmung. Der Fachmann kennt diese Methode und kann die entsprechenden Messparameter einstellen. Das rezyklierte Polystyrol-Granulat (5a) weist eine hervorragende Umweltbilanz auf, ist umweltfreundlich und kann ohne Weiteres zu neuen Produkten, wie PolystyrolSchaumstoffe, beispielsweise zu EPS- und XPS-Dämmplatten verarbeitet werden. Auch weist das Polystyrol-Granulat (5a) keine toxischen Reaktionsprodukte auf und kann nach Ablauf des Lebenszyklus ohne besondere Vorsichtsmassnahmen entsorgt, beispielsweise herkömmlich thermisch verwertet werden.

Das nach dem erfindungsgemässen Verfahren erhaltene, sowie das erfindungsgemässe rezyklierte Polystyrol-Granulat (5a) weist bevorzugt einen pH-Wert von höchstens 9.0, bevorzugt höchstens 8.5, und insbesondere höchstens 8.0, auf, wenn 10 g Polystyrol-Granulat (5a) mit einem Durchmesser von höchstens 2 mm, gemessen nach ISO 3310-1:2016, mit 10 g Wasser während 15 Minuten miteinander vermischt werden, wobei bevorzugt deionisiertes Wasser verwendet wird. Dabei werden beispielsweise das auf höchstens 2 mm zerkleinerte Polystyrol-Granulat (5a) mit dem Wasser bei Raumtemperatur in einem verschlossenen Gefäss während 15 Minuten heftig geschüttelt und anschliessend der pH-Wert gemessen. Die Bestimmung des pH-Wertes erfolgt typischerweise gemäss DIN EN ISO 10523 - (2012-04).

Zudem weisen das nach dem erfindungsgemässen Verfahren erhaltene, sowie das erfindungsgemässe rezyklierte Polystyrol-Granulat (5a) bevorzugt einen Aschegehalt, bestimmt bei 800°C nach DIN EN ISO 3451-1:2019-05 von höchstens 2 Gew.-%, bevorzugt höchstens 1 Gew.-%, auf.

Das erfindungsgemässe rezyklierte Polystyrol-Granulat (5a) und das nach dem erfindungsgemässen Verfahren erhaltene rezyklierte Polystyrol-Granulat (5a) eignet sich insbesondere zur Herstellung von Extrudierten (XPS) Polystyrol-Dämmplatten oder zur Herstellung von expandierbaren Polystyrol-Beads, welche weiter zu Expandierten (EPS) Polystyrol-Artikeln, insbesondere zu Expandierten (EPS) Polystyrol-Dämmplatten oder Expandierten (EPS) Verpackungsmaterialien weiterverarbeitet werden können.

### Beispiele

Für die nachfolgenden Beispiele wurde zu rezyklierendes expandiertes Polystyrol (EPS) mit einem HBCD-Gehalt von 6500 ppm, bestimmt mittels Toluol-Extraktion mit nachfolgender GC-MS- bzw. MS/MS-Bestimmung, mit einem herkömmlichen Schredder auf eine durchschnittliche Partikelgrösse von 5-50 mm zerkleinert und anschliessend dem ersten Reaktionsgefäss (6a), ein Doppelschneckenextruder (Göttfert Doppelschneckenextuder C18), zugeführt. Dem Doppelschneckenextruder wurde als nachfolgendes Reaktionsgefäss (6b) ein mit einem beheizbaren Mantel ausgestatten statischen Mischer mit einer Länge von 1 m und einem Innendurchmesser von ca. 12 cm der Firma Promix nachgeschaltet. Die Temperaturen beider Reaktionsgefässe (6a, 6b) wurden in den Beispielen gleich eingestellt. Die Verweilzeit der Polystyrol-Mischschmelze (4) im ersten Reaktionsgefäss (6a), d.h. im Extruder, betrug - je nach Drehzahl der Extruderschnecken - ca. 10 bis 30 Sekunden, und jene im statischen Mischer entspricht der Differenz zu den in den Tabellen angegebenen Verweilzeiten.

Als Base wurde Calciumoxid (CaO) mit einer Korngrösse von 3 bis 20 mm in einer Menge von 0.5 Gew.-%, bezogen auf das dem Extruder zugeführte zerkleinerte EPS, zugegeben, was einem molaren Verhältnis der Base (3) - unter Berücksichtigung der Wertigkeit des Calciums - zum Brom-Anteil der organischen Brom-Verbindung (2) im zu rezyklierenden Polystyrol von 1.5 : 1 entspricht. Zudem wurden 0.3 Gew.-% eines Antioxidans (Irganox 1076; Octadecyl-3-(3,5-di-tert-butyl-4-hydroxyphenyl)-propionat) zudosiert. Der Aschegehalt, bestimmt bei 800 °C, betrug 0.7 Gew.-%, und der gemessene pH-Wert blieb unverändert, d.h. er entspricht demjenigen des eingesetzten Wassers.

Bei allen Versuchen wurde keine Beeinträchtigung des erhaltenen rezyklierten Polystyrol-Granulats (5a), beispielsweise in Bezug auf einen erhöhten pH-Wert oder schlechtere Dämmeigenschaften von nachfolgend hergestellte EPS- resp. XPS-Dämmplatten, beobachtet.

**Tabelle 1: Variation der Verweilzeit der Polystyrol-Mischschmelze (4) im ersten (6a; Extruder) und nachfolgenden (6b) Reaktionsgefäss bei einer Temperatur von 280°C und bei zwei verschiedenen Mischgeschwindigkeiten im Extruder («Speed»). Die Verweilzeit wurde durch Änderung der Polystyrol-Durchsatzmenge («PS-Menge») eingestellt.**

| **Vers.-Nr.** | **PS-Menge [Kg/Std]** | **Verweilzeit [min]** | **Speed [Upm]** | **Temp. [°C]** | **HBCD [ppm]** |
|---|---|---|---|---|---|
| A-1 | 30 | 6.2 | 35 | 280 | 860 |
| A-2 | 25 | 7.2 | 35 | 280 | 600 |
| A-3 | 20 | 9.2 | 35 | 280 | 240 |
| A-4 | 30 | 4 | 350 | 280 | 150 |
| A-5 | 20 | 5.8 | 350 | 280 | <50 |

Die Resultate der Tabelle 1 zeigen deutlich, dass das Flammschutzmittel HBCD, eine organische Brom-Verbindung (2), bei konstanter Mischgeschwindigkeit durch Erhöhung der Verweilzeit und in Abhängigkeit der Mischgeschwindigkeit reduziert wird (Versuche A-1 bis A-3 vs. A-4 und A-5). Wird die Mischgeschwindigkeit verzehnfacht, reduziert sich nicht nur die Verweilzeit, sondern auch der HBCD-Anteil deutlich. Bei den Versuchen A-1 und A-2 sind zudem die Verfahrensparameter wie Verweilzeit, Temperatur sowie die Mischgeschwindigkeit im ersten Reaktionsgefäss (6a), d.h. im Extruder, nicht so optimal eingestellt, dass ein rezykliertes Polystyrol-Granulat (5a) mit einem Rest-HBCD-Gehalt von höchstens 500 ppm erhalten wird.

**Tabelle 2: Variation der Mischgeschwindigkeit («Speed») im ersten Reaktionsgefäss (6a, Extruder) bei gleichbleibendem Durchsatz und gleicher Temperatur.**

| **Vers.-Nr.** | **PS-Menge [Kg/Std]** | **Verweilzeit [min]** | **Speed [Upm]** | **Temp. [°C]** | **HBCD [ppm]** |
|---|---|---|---|---|---|
| B-1 | 20 | 9.2 | 35 | 280 | 240 |
| B-2 | 20 | 5.8 | 350 | 280 | <50 |

Die Resultate der Tabelle 2 zeigen deutlich, dass durch Verzehnfachung der Mischgeschwindigkeit das Flammschutzmittel HBCD, d.h. die organische Brom-Verbindung (2), verstärkt abgebaut wird. Die Verweilzeit reduzierte sich aufgrund der Erhöhung der Mischgeschwindigkeit, hatte jedoch einen untergeordneten Einfluss auf die restliche HBCD-Menge. Die Temperatur und die Polystyrol-Durchsatzmenge, d.h. die «PS-Menge», wurden unverändert belassen.

## Patentansprüche

1. Verfahren zum Rezyklieren von Polystyrol (1) enthaltend organische Brom-Verbindungen (2), umfassend
- Zerkleinern und Erhitzen des zu rezyklierenden Polystyrols (1) enthaltend organische Brom-Verbindungen (2), wodurch eine Polystyrol-Schmelze (1a) erhalten wird,
- Zugabe mindestens einer Base (3) zum zerkleinerten Polystyrol (1) und/oder zur Polystyrol-Schmelze (1a) und Vermischen derselben, wodurch eine Polystyrol-Mischschmelze (4) erhalten wird, sowie
- Abkühlen und Zerkleinern der Polystyrol-Mischschmelze (4), wodurch ein rezykliertes Polystyrol-Granulat (5a) erhalten wird,
**dadurch gekennzeichnet, dass** die Polystyrol-Mischschmelze (4) vor dem Abkühlen und Zerkleinern in mindestens einem ersten (6a) und in einem nachfolgenden (6b) Reaktionsgefäss (6) bei einer Temperatur zwischen 180°C und 285°C und einer Verweilzeit von insgesamt mindestens 4 Minuten vermischt wird, wobei das
i) erste Reaktionsgefäss (6a) einen Extruder, und
ii) zweite Reaktionsgefäss (6b) einen Reaktor oder Mischer, oder einen Extruder darstellt.

2. Verfahren nach Anspruch 1, **dadurch gekennzeichnet, dass** die Verweilzeit der Polystyrol-Mischschmelze (4), die Mischgeschwindigkeit und die Temperatur im ersten (6a) und nachfolgenden (6b) Reaktionsgefäss (6) so optimiert werden, dass der Gehalt der organischen Brom-Verbindungen (2) im erhaltenen rezyklierten Polystyrol-Granulat (5a) höchstens 500 ppm, bevorzugt höchstens 100 ppm, bestimmt nach Toluol-Extraktion mit nachfolgender GC-MS- bzw. MS/MS-Bestimmung, beträgt.

3. Verfahren nach Anspruch 1 oder 2, **dadurch gekennzeichnet, dass** ein Antioxidans (7) zum zerkleinerten Polystyrol (1) und/oder zur Polystyrol-Schmelze (1a) zugegeben und vermischt wird, wobei die Zugabe zusammen mit der Base (3) oder separat erfolgen kann.

4. Verfahren nach mindestens einem der Ansprüche 1 bis 3, **dadurch gekennzeichnet, dass** das zu rezyklierende Polystyrol (1) auf eine Partikelgrösse von höchstens 5 cm, bevorzugt höchstens 3 cm, gemessen gemäss ISO 3310-1:2016, zerkleinert wird, wobei die Zerkleinerung bevorzugt mittels Schredder, Granulator, Schneidmühle, Messermühle, Hammermühle, Wellen-Zerkleinerer und/oder Häcksler erfolgt.

5. Verfahren nach mindestens einem der Ansprüche 1 bis 4, **dadurch gekennzeichnet, dass**
- die gemeinsame Verweilzeit der Polystyrol-Mischschmelze (4) im ersten (6a) und im nachfolgenden (6b) Reaktionsgefäss (6) 4 bis 20 Minuten, bevorzugt 4 bis 15 Minuten, insbesondere während 4 bis 10 Minuten, beträgt, und/oder
- die Temperatur im ersten (6a) und im nachfolgenden (6b) Reaktionsgefäss (6) zwischen 180°C und 285°C, bevorzugt zwischen 190°C und 285°C, insbesondere zwischen 220°C und 280°C, beträgt.

6. Verfahren nach mindestens einem der Ansprüche 1 bis 5, **dadurch gekennzeichnet, dass** das molare Verhältnis der Base (3) - unter Berücksichtigung deren Ionenzahl - zum Brom-Anteil der im zu rezyklierenden Polystyrol vorhandenen organischen Brom-Verbindungen höchstens 5:1, bevorzugt höchstens 4:1, und insbesondere höchstens 3:1, beträgt.

7. Verfahren nach mindestens einem der Ansprüche 1 bis 6, **dadurch gekennzeichnet, dass**
- der Extruder ein Kolbenextruder, Kaskadenextruder, Planetwalzenextruder, Schneckenextruder, Einschneckenextruder, Doppelschneckenextruder, Vielwellenextruder, Co-Kneter, und/oder Ringextruder, und/oder
- der Mischer ein Schmelze-Mischer oder statischer Mischer darstellt.

8. Verfahren nach mindestens einem der Ansprüche 1 bis 7, **dadurch gekennzeichnet, dass** die Base (3) und/oder das Antioxidans (7) in Form eines Festkörpers oder einer Flüssigkeit vorliegen, wobei die Flüssigkeit gegebenenfalls auf ein Trägermaterial adsorbiert sein kann und die Zugabe der Base (3) und/oder des Antioxidans (7) zum zerkleinerten Polystyrol (1) und/oder zur Polystyrol-Schmelze (1a) bevorzugt pulverförmig erfolgt.

9. Verfahren nach mindestens einem der Ansprüche 1 bis 8, **dadurch gekennzeichnet, dass** die mindestens eine Base (3) eine anorganische Base wie ein Alkali- oder Erdalkalihydroxid oder -oxid, Aluminiumhydroxid, ein Alkaliphosphat oder -phosphit, und/oder eine organische Base wie 1,8-Bis(N,N-dimethylamino)naphthalin oder 1,4-Diazabicyclo-[2.2.2]octan, oder Mischungen davon, darstellt.

10. Verfahren nach mindestens einem der Ansprüche 3 bis 9, **dadurch gekennzeichnet, dass** das mindestens eine Antioxidans (7) ein sterisch gehindertes Phenol, ein N-phenylanilin oder Derivate davon, ein sterisch gehindertes aromatisches Amin, ein Dialkyl Ester der Thiodipropionsäure, ein sterisch gehindertes aromatisches Amin, ein Phosphat Ester oder Phosphite Ester, beispielsweise tris(2,4-di-tert-butylphenyl)phosphit, ein anorganisches Phosphit oder Phosphat, beispielsweise Kaliummonoorthophosphat (KH₂PO₄), oder Mischungen davon, darstellt.

11. Verfahren nach mindestens einem der Ansprüche 1 bis 10, **dadurch gekennzeichnet, dass**
- die Base (3) und/oder das Antioxidans (7) in Form eines Festkörpers vorliegen und eine Partikelgrösse von höchstens 2 cm, bevorzugt höchstens 1 cm, gemessen gemäss ISO 3310-1:2016 aufweisen,
- die Base (3) und gegebenenfalls das Antioxidans (7) in je einer Menge von 0.1 bis 4 Gew.-%, insbesondere von 0.2 bis 3 Gew.-%, bezogen auf 100 Gew.-% Polystyrol (1), dem Polystyrol (1) zugegeben werden, und/oder
- das Gewichtsverhältnis des Antioxidans (7) zur Base (3) von 0.2 bis 5, insbesondere von 0.3 bis 3.5, beträgt.

12. Rezykliertes Polystyrol-Granulat (5a) erhalten nach dem Verfahren nach mindestens einem der Ansprüche 1 bis 11, wobei der Anteil von organischen Brom-Verbindungen (2) höchstens 500 ppm, bevorzugt höchstens 100 ppm, bestimmt nach Toluol-Extraktion mit nachfolgender GC-MS- bzw. MS/MS-Bestimmung, beträgt, **dadurch gekennzeichnet, dass** das Polystyrol-Granulat (5a)
- einen pH-Wert von höchstens 9.0, bevorzugt höchstens 8.5, und insbesondere höchstens 8.0, aufweist, wenn 10 g Polystyrol-Granulat (5a) mit einem Durchmesser von höchstens 2 mm, gemessen nach ISO 3310-1:2016, mit 10 g Wasser während 15 Minuten miteinander vermischt werden, und/oder
- einen Aschegehalt, bestimmt bei 800°C nach DIN EN ISO 3451-1:2019-05, von höchstens 2 Gew.-%, bevorzugt höchstens 1 Gew.-%, aufweist.

13. Verwendung des rezyklierten Polystyrol-Granulats (5a) erhalten nach dem Verfahren nach mindestens einem der Ansprüche 1 bis 11 und des rezyklierten Polystyrol-Granulats (5a) nach Anspruch 12 zur Herstellung von Extrudierten (XPS) Polystyrol-Dämmplatten oder zur Herstellung von expandierbaren Polystyrol-Beads, welche zu Expandierten (EPS) Polystyrol-Artikel, insbesondere zu Expandierten (EPS) Polystyrol-Dämmplatten oder Expandierten (EPS) Verpackungsmaterialien weiterverarbeitet werden können.
